# EUROPEAN PATENT APPLICATION

(11) **EP 4 836 065 A1**
(43) Date of publication of application: **04.11.2026**
(21) Application number: 24912645.9
(22) Date of filing: 20.12.2024
(51) Int. Cl.: H01M 10/0587, H01M 4/38, H01M 4/64, H01M 4/66, H01M 4/134, H01M 10/052, H01M 10/0566

(54) **CYLINDRICAL SECONDARY BATTERY**

(30) Priority: 26.12.2023 JP 2023219570
(71) Applicant: Panasonic Intellectual Property Management Co., Ltd., Kadoma-shi, Osaka 571-0057 (JP)
(72) Inventor: TSUKASAKI, Takashi, Kadoma-shi, Osaka 571-0057 (JP); MATSUMOTO, Katsumasa, Kadoma-shi, Osaka 571-0057 (JP)
(74) Representative: Novagraaf International SA
(86) International application number: PCT/JP2024/045098
(87) International publication number: WO 2025/142756

(57) **Abstract**

A battery (10) includes a wound electrode body (14), a nonaqueous electrolyte, and a bottomed cylindrical outer can. A discharge capacity per 1.0 g of a negative-electrode mixture layer (52) is 0.50 Ah or more. A negative electrode (12) includes a both-side mixture disposition part (60) in which the negative-electrode mixture layer (52) is disposed on both a winding inner surface and a winding outer surface of a negative-electrode current collector (51). The negative electrode (12) has a positive-electrode facing part (65) in which both a winding inner side and a winding outer side of the both-side mixture disposition part (60) face a positive electrode in a radial direction. When a total length in a negative-electrode longitudinal direction in the positive-electrode facing part (65) is assumed to be x, an average aw1 of the length a negative-electrode width direction of the negative-electrode mixture layer (52) from a winding-start end to x/4 in the positive-electrode facing part (65) is set to 1.0025 times or more and less than 1.0100 times of an average aw2 of a length in the negative-electrode width direction of the negative-electrode mixture layer (52) from a winding-end end of the positive-electrode facing part (65) to x/4.

## Description

### TECHNICAL FIELD

The present disclosure relates to a cylindrical secondary battery.

### BACKGROUND ART

There is conventionally a cylindrical secondary battery as disclosed in Patent Literature 1. The cylindrical secondary battery comprises an electrode assembly having a positive electrode and a negative electrode wound through a separator, a bottomed cylindrical housing can that houses the electrode assembly, and a sealing assembly that is crimped and fixed to an opening portion of the housing can through a gasket. One end portion of a positive electrode lead is joined to an intermediate portion of the positive electrode in a winding direction, and the other end portion of the positive electrode lead is joined to an inner surface of the sealing assembly. In addition, one end portion of a negative electrode lead is joined to an end portion of the negative electrode on a winding terminal side, and the other end portion of the negative electrode lead is joined to the inner surface of a bottom portion of the housing can.

### CITATION LIST

### PATENT LITERATURE

PATENT LITERATURE 1: Japanese Unexamined Patent Application Republication No. 2019-044770

### SUMMARY

In the cylindrical secondary battery, radial stress on the electrode assembly increases with expansion of the negative electrode during charging. Therefore, when the electrode receives inward force due to the radial stress on the winding inner side in the vicinity of a hollow portion of the electrode assembly, the electrode may bend toward the hollow portion, and this may cause damage to the separator. Accordingly, it is an advantage of the present disclosure to provide a cylindrical secondary battery that can restrain bending of the electrode on a winding inner side of an electrode assembly.

In order to solve the above problem, a cylindrical secondary battery according to the present disclosure comprises: an electrode assembly having a strip-shaped positive electrode and a strip-shaped negative electrode wound through a separator; a non-aqueous electrolyte; and a bottomed cylindrical housing can that houses the electrode assembly and the non-aqueous electrolyte, wherein the positive electrode includes a positive electrode current collector and a positive electrode mixture layer arranged on the positive electrode current collector, the negative electrode includes a negative electrode current collector and a negative electrode mixture layer arranged on the negative electrode current collector, a discharge capacity per 1.0 g of the negative electrode mixture layer is greater than or equal to 0.50 Ah, the negative electrode includes a both-side mixture arrangement portion where the negative electrode mixture layer is arranged on both a winding inner surface and a winding outer surface of the negative electrode current collector, the negative electrode has a positive electrode facing portion where both a winding inner side and a winding outer side of the both-side mixture arrangement portion face the positive electrode in a radial direction, and when a total length of the positive electrode facing portion in a negative electrode longitudinal direction is defined as x, an average length aw1 of the negative electrode mixture layer in a negative electrode width direction from a winding start end of the positive electrode facing portion to x/4 is greater than or equal to 1.0025 times and less than 1.0100 times an average length aw2 of the negative electrode mixture layer in the negative electrode width direction from a winding terminal end of the positive electrode facing portion to x/4. Here, the radial direction is the radial direction of the cylindrical secondary battery and is also the radial direction of the housing can.

In the cylindrical secondary battery according to the present disclosure, it is possible to restrain the bending of the electrode on the winding inner side of the electrode assembly.

### BRIEF DESCRIPTION OF DRAWING

FIG. 1 is an axial sectional view of a cylindrical secondary battery in a cylindrical shape according to an embodiment of the present disclosure.
FIG. 2 is a perspective view of an electrode assembly of the cylindrical secondary battery.
FIG. 3 is a schematic view schematically showing an example of the structure of a negative electrode mixture layer.
FIG. 4 is a schematic top view showing the winding inner side of the electrode assembly as viewed from an axial upper side.
FIG. 5 is a view showing the relationship between strain and stress when tensile testing is performed on a negative electrode current collector in an example.
FIG. 6 is a top view showing the position of a winding inner-side portion of the negative electrode and the position of a winding outer-side portion of the negative electrode when the electrode assembly is viewed from the upper side in the axial direction.
FIG. 7 is an axial schematic half-sectional view around the electrode assembly in the battery after repeated charging and discharging, the schematic half-sectional view showing an elongated state of the winding inner region of the negative electrode.
FIG. 8 is a diagram showing an example of the relationship between the radial position of the housing can and the width of the negative electrode.
FIG. 9 is a view illustrating a bending angle of the electrode.

### DESCRIPTION OF EMBODIMENTS

Hereinafter, an embodiment of a cylindrical secondary battery according to the present disclosure will be described in detail with reference to the drawings. The cylindrical secondary battery of the present disclosure may be a battery using an aqueous electrolyte or a battery using a non-aqueous electrolyte. As a cylindrical secondary battery 10 constituting one embodiment, a cylindrical lithium-ion secondary battery using a non-aqueous electrolyte is illustrated below, though the cylindrical secondary battery of the present disclosure is not limited thereto. It is assumed from the beginning that a new embodiment is constructed by appropriately combining characteristic portions of the embodiment or modifications thereof as will be described below. In the embodiment below, like component members are designated by like reference signs to omit redundant description. The plurality of drawings also include schematic drawings, and throughout the different drawings, dimensional ratios of length, width, height, and the like do not necessarily match for each member. In this specification, the side of a sealing assembly 17 in an axial direction (height direction) of a cylindrical secondary battery 10 in a cylindrical shape is defined as "upper side", and the side of a bottom portion 55 of a housing can 16 in the axial direction is defined as "lower side". Among the component members described below, those not included in an independent claim that represents the highest-level concept are optional and not essential component members. The present disclosure is also not limited to the embodiment and its modifications disclosed, and various improvements and changes are possible without departing from the scope of the Claims of the present application and any equivalents thereof. If a cylindrical secondary battery satisfies any requirements specified in the claims of this patent application at any time from manufacture to disposal (including the period from disposal to disappearance), the cylindrical secondary battery is deemed to constitute infringement of the patent. For example, if a cylindrical secondary battery satisfies any conditions specified in the claims of this patent application at the time of shipment, the cylindrical secondary battery is deemed to constitute infringement of the patent. When a cylindrical secondary battery satisfies any conditions specified in the claims of this patent application at the time of use after shipment, the cylindrical secondary battery is deemed to constitute infringement of the patent.

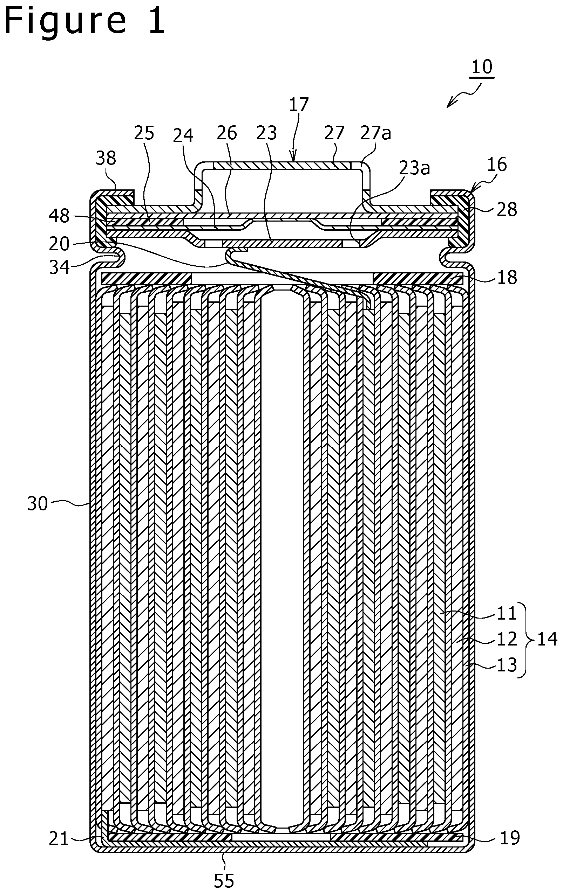

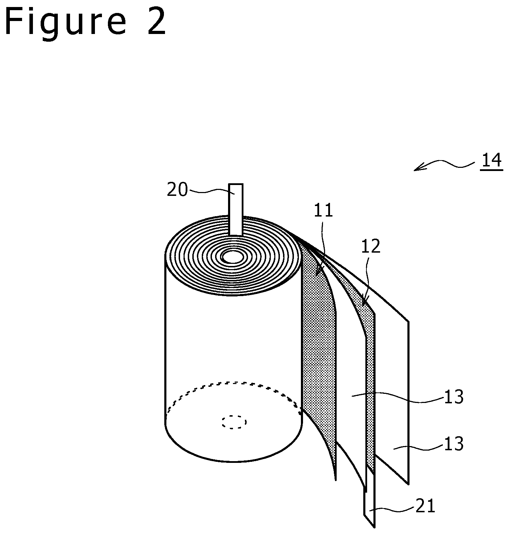

FIG. 1 is an axial sectional view of the cylindrical secondary battery 10 in a cylindrical shape according to one embodiment of the present disclosure, and FIG. 2 is a perspective view of an electrode assembly 14 of the cylindrical secondary battery 10. As shown in FIG. 1, the cylindrical secondary battery (hereinafter simply referred to as the battery) 10 comprises the winding type electrode assembly 14, a non-aqueous electrolyte (not shown), a bottomed cylindrical metallic housing can 16 that houses the electrode assembly 14 and the non-aqueous electrolyte, and the sealing assembly 17 that seals an opening portion of the housing can 16. As shown in FIG. 2, the electrode assembly 14 has a winding structure formed by winding a long-shaped positive electrode 11 and a long-shaped negative electrode 12 through two long-shaped separators 13.

In order to prevent lithium deposition, the negative electrode 12 is formed with a dimension that is slightly larger than the positive electrode 11. Specifically, the negative electrode 12 is formed to be longer in a longitudinal direction and a width direction (short direction) than the positive electrode 11. The two separators 13 are also formed with a dimension that is at least slightly larger than the positive electrode 11 and are arranged, for example, to hold the positive electrode 11 therebetween. The negative electrode 12 may constitute a winding start end of the electrode assembly 14. However, the separators 13 typically extend beyond a winding start-side end of the negative electrode 12, and the winding start-side ends of the separators 13 constitute the winding start end of the electrode assembly 14.

The non-aqueous electrolyte has ion conductivity (for example, lithium ion conductivity). The non-aqueous electrolyte may be a liquid electrolyte (electrolyte solution) or a solid electrolyte. The liquid electrolyte (electrolyte solution) contains non-aqueous solvent and electrolyte salt solved in the non-aqueous solvent. As the non-aqueous solvent, there may be used, for example, esters, ethers, nitriles, amides, and mixed solvents of two or more of the group consisting of these. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen substituted product (e.g., fluoroethylene carbonate) that replaces at least some of the hydrogen in these solvents with halogen atoms such as fluorine. As the electrolyte salt, lithium salt such as LiPF₆ is used, for example.

As the solid electrolyte, there may be used, for example, solid or gel-like polymer electrolyte, inorganic solid electrolyte, or the like. The polymer electrolyte contains, for example, lithium salt and matrix polymer, or non-aqueous solvent, lithium salt, and matrix polymer. As the matrix polymer, a polymer material that turns into a gel by absorbing non-aqueous solvent is used, for example. As the polymer material, there may be used, for example, fluororesin, acrylic resin, and polyether resin, or the like. As the inorganic solid electrolyte, materials that are publicly known in all solid lithium-ion secondary batteries (e.g., oxide-based solid electrolyte, sulfide-based solid electrolyte, halogen-based solid electrolyte, etc.) may be used.

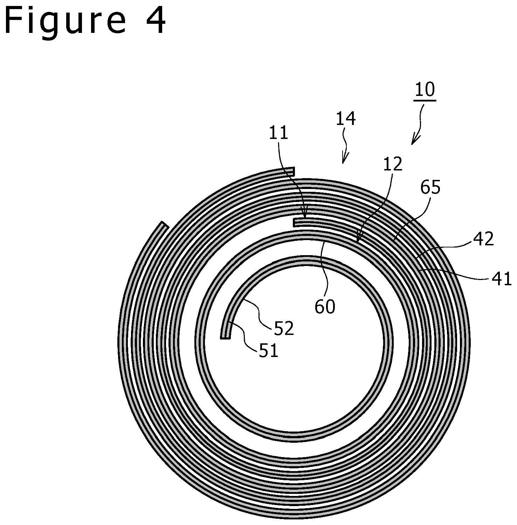

A positive electrode 11 includes a positive electrode current collector 41 (see FIG. 4) and a positive electrode mixture layer 42 arranged on both the surfaces of the positive electrode current collector 41 (see FIG. 4). As the positive electrode current collector 41, there may be used a foil made of metal, such as aluminum and aluminum alloy, that is stable in a potential range of the positive electrode 11, a film with the metal arranged on its surface layer, or the like. The positive electrode mixture layer 42 contains a positive electrode active material, a conductive agent, and a binding agent. The positive electrode 11 can be fabricated by, for example, coating the positive electrode current collector 41 with positive electrode mixture slurry containing a positive electrode active material, a conductive agent, and a binding agent, or the like, drying the coating, and then compressing the coating to form a positive electrode mixture layer 42 on both the surfaces of the positive electrode current collector 41.

The positive electrode active material is constituted with lithium-containing composite oxide as a main component. Examples of metal elements contained in the lithium-containing composite oxide (lithium-containing metal composite oxide) include Ni, Co, Mn, Al, B, Mg, Ti, V, Cr, Fe, Cu, Zn, Ga, Sr, Zr, Nb, In, Sn, Ta, and W. Preferable examples of the lithium-containing composite oxide include a composite oxide containing at least one of the group consisting of Ni, Co, Mn, and Al. The lithium-containing composite oxide may have a spinel structure and may have an olivine structure. However, the lithium-containing composite oxide preferably has a layered rock-salt structure because it facilitates the fabrication of the positive electrode with a large discharge capacity.

Examples of the conductive agent contained in the positive electrode mixture layer 42 may include carbon black such as acetylene black and Ketjenblack, and carbon materials such as graphite. Examples of the binding agent contained in the positive electrode mixture layer 42 may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salts, polyethylene oxide (PEO), or the like.

A negative electrode 12 includes a negative electrode current collector 51 (see FIG. 4) and a negative electrode mixture layer 52 (see FIG. 4) arranged on both the surfaces of the negative electrode current collector 51. As the negative electrode current collector 51, there may be used a foil made of metal, such as copper and copper alloy, that is stable in a potential range of the negative electrode 12, a film with the metal arranged on its surface layer, or the like. The negative electrode mixture layer 52 contains a negative electrode active material and a binding agent. The negative electrode 12 can be fabricated by, for example, coating the negative electrode current collector 51 with negative electrode mixture slurry containing a negative electrode active material, and a binding agent, or the like, drying the coating, and then compressing the coating to form the negative electrode mixture layer 52 on both the surfaces of the negative electrode current collector 51.

As the negative electrode active material, a carbon material that reversibly absorbs and releases lithium ions is typically used. Preferable carbon materials include natural graphite such as flake graphite, massive graphite, and earthy graphite, and artificial graphite such as massive artificial graphite, and graphitized mesophase carbon microbeads. A discharge capacity per 1.0 g of the negative electrode mixture layer 52 is greater than or equal to 0.50 Ah. In order to effectively increase the discharge capacity per 1.0 g of the negative electrode mixture layer, the negative electrode mixture layer 52 preferably includes a silicon-containing material that contains silicon (Si) as a negative electrode active material.

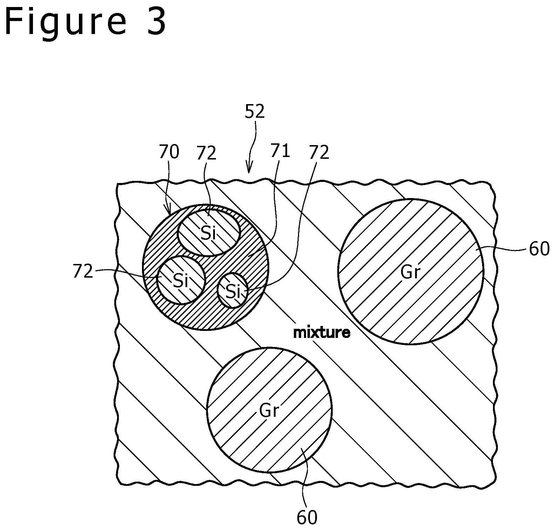

FIG. 3 is a schematic view schematically showing an example of the structure of the negative electrode mixture layer 52. As shown in FIG. 3, the negative electrode mixture layer 52 preferably contains a black lead (graphite) 60 and a silicon-containing material 70. The silicon-containing material 70 includes, for example, an ionically conductive phase 71 and an Si phase 72 dispersed in the ionically conductive phase 71. For easily achieving higher discharge capacity and high output of the battery 10, a weight ratio of the Si phase 72 in the silicon-containing material 70 is preferably greater than or equal to 30%. In addition, since a volume change in the negative electrode mixture layer 52 can be reduced during charging and discharging, it is possible to effectively restrain bending of the electrodes 11 and 12 on the winding inner side of the electrode assembly as will be described in detail below. Hence, the weight ratio of the Si phase 72 in the silicon-containing material 70 is preferably less than or equal to 60%. The ionically conductive phase 71 may be constituted of, for example, an amorphous carbon phase, a lithium silicate phase, a lithium aluminate phase, a silicon oxide phase, a titanium oxide phase, a zirconium oxide phase, or the like. However, the ionically conductive phase 71 preferably contains an amorphous carbon phase in order to restrain the volume change in the negative electrode active material during charging and discharging and to increase charging and discharging efficiency.

From the perspective of a weight ratio of the silicon element to the negative electrode mixture layer 52, the weight ratio of the silicon element to the negative electrode mixture layer 52 is preferably greater than or equal to 7 mass%, and more preferably greater than or equal to 12 mass% for high discharge capacity and high output of the battery 10. In addition, since a volume change in the negative electrode mixture layer 52 can be reduced during charging and discharging, it is possible to effectively restrain the bending of the electrodes 11 and 12 on the winding inner side of the electrode assembly and therefore, the weight ratio of the silicon element to the negative electrode mixture layer 52 is preferably less than 50 mass%. In the case where the negative electrode mixture layer 52 contains the silicon-containing material 70, the mass of the silicon element may be equivalent to the mass of Si phase 72. In other words, the weight ratio of the Si phase 72 to the negative electrode mixture layer 52 may be greater than or equal to 7 mass% and less than 50 mass%. As the negative electrode active material, there may be used metals, other than Si, that alloy with lithium, or alloys containing the metals, and compounds containing the metals, or the like.

As the binding agent contained in the negative electrode mixture layer 52, there may be used, as in the case of the positive electrode 11, fluororesin, PAN, polyimide resin, acrylic resin, polyolefin resin, or the like, though styrene-butadiene rubber (SBR) or its modification products are preferably used. For example, the negative electrode mixture layer 52 may contain, in addition to SBR or the like, CMC or its salt, polyacrylic acid (PAA) or its salt, polyvinyl alcohol, or the like.

As the separators 13, a porous sheet with ion permeability and insulation properties is used. Specific examples of the porous sheet include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

As shown in FIG. 1, the positive electrode 11 is joined to a positive electrode lead 20, while an end portion of the negative electrode 12 on a winding terminal side in a longitudinal direction is joined to a negative electrode lead 21. The battery 10 has an insulating plate 18 above the electrode assembly 14 and an insulating plate 19 below the electrode assembly 14. The positive electrode lead 20 extends toward the sealing assembly 17 through a through-hole of the insulating plate 18, and the negative electrode lead 21 extends toward the bottom portion 55 of the housing can 16 through the outside of the insulating plate 19. The positive electrode lead 20 is connected to the lower surface of a terminal plate 23 of the sealing assembly 17 by welding or other processing. A terminal cap 27, which constitutes a top plate of the sealing assembly 17, is electrically connected to the terminal plate 23, so that the terminal cap 27 serves as a positive electrode terminal. The negative electrode lead 21 is connected to an inner surface of the bottom portion 55 of the metallic housing can 16 by welding or other processing, so that the housing can 16 serves as a negative electrode terminal.

The positive electrode 11 has a positive electrode current collector exposed portion where the positive electrode current collector 41 is exposed in an intermediate portion such as a central portion in a positive electrode longitudinal direction, and the positive electrode lead 20 is joined and electrically connected to the positive electrode current collector exposed portion by ultrasonic welding or other processing. The negative electrode 12 has a negative electrode current collector exposed portion where the negative electrode current collector 51 is exposed at an end portion on the winding terminal side in its winding direction, and the negative electrode lead 21 is joined and electrically connected to the negative electrode current collector exposed portion by ultrasonic welding or other processing.

The battery may have a plurality of positive electrode leads, and the positive electrode may have a plurality of positive electrode current collector exposed portions arranged at intervals in the positive electrode longitudinal direction and joined to one end portions of the positive electrode leads. The battery may also comprise a current collector plate joined to other end portions of the respective positive electrode leads. The current collector plate may be electrically connected to the terminal cap.

Alternatively, a strip-shaped positive electrode may have a strip-shaped positive electrode current collector exposed portion at a one-side end portion in the positive electrode width direction, the strip-shaped positive electrode current collector exposed portion extending in the positive electrode longitudinal direction from one end to the other end in the positive electrode longitudinal direction. In addition, a wide range of the strip-shaped positive electrode current collector exposed portion in the positive electrode longitudinal direction may be joined to the current collector plate by laser welding or resistance welding. The current collector plate joined to the positive electrode current collector exposed portion may be electrically connected to the terminal cap. By adopting these modifications, a current collection path on the positive electrode side can be shortened, thereby reducing electrical resistance.

The negative electrode may have a first negative electrode current collector exposed portion where the negative electrode current collector is exposed at an end portion on the winding start side in the negative electrode longitudinal direction, and also a second negative electrode current collector exposed portion where the negative electrode current collector is exposed at an end portion on the winding terminal side in the negative electrode longitudinal direction. The second negative electrode current collector exposed portion may also have an outermost circumferential surface portion included in the outermost circumferential surface of the electrode assembly. One end portion of the negative electrode lead may also be joined to the first negative electrode current collector exposed portion, and the other end portion of the negative electrode lead may be joined to the inner surface of the bottom portion of the housing can. In addition, the outermost circumferential surface portion may be in contact with the inner circumferential surface of the housing can.

Alternatively, two negative electrode leads may be joined to the electrode assembly, with one end portion of one negative electrode lead being electrically connected to a winding start-side end portion of the negative electrode current collector in the negative electrode longitudinal direction, while one end portion of the other negative electrode lead being electrically connected to a winding terminal-side end portion of the negative electrode current collector in the negative electrode longitudinal direction. The other end portions of the respective negative electrode leads may be electrically connected to the bottom portion of the housing can.

Alternatively, a strip-shaped negative electrode may have a strip-shaped negative electrode current collector exposed portion in a one-side end portion in the negative electrode width direction, the strip-shaped negative electrode current collector exposed portion extending in the negative electrode longitudinal direction from one end to the other end in the negative electrode longitudinal direction. In addition, a wide range of the strip-shaped negative electrode current collector exposed portion in the negative electrode longitudinal direction may be joined to the current collector plate by laser welding or resistance welding. The current collector plate may also be electrically connected to the bottom portion of the housing can by laser welding or other processing. By adopting these modifications, the current collection path on the negative electrode side can be shortened, thereby reducing electrical resistance.

As shown in FIG. 1, the battery 10 further comprises a resin gasket 28 arranged between the housing can 16 and the sealing assembly 17. The sealing assembly 17 is crimped and fixed to an opening side of the housing can 16 through the gasket 28. As a result, internal space of the battery 10 is sealed. The gasket 28 is held between the housing can 16 and the sealing assembly 17 to insulate the sealing assembly 17 against the housing can 16. The gasket 28 functions as a sealing material to maintain the inside of the battery airtight and also functions as an insulating material to insulate between the housing can 16 and the sealing assembly 17.

The housing can 16 houses the electrode assembly 14 and non-aqueous electrolyte. The housing can 16 has a cylindrical portion 30 and the bottom portion 55, and the cylindrical portion 30 includes a shoulder portion 38 and a grooved portion 34. The grooved portion 34 can be formed by, for example, recessing a portion of the side surface of the housing can 16 radially inward in an annular shape by a spinning process performed in a radially inward direction. The shoulder portion 38 is formed by bending an upper end portion of the housing can 16 inward toward a circumferential edge portion 48 of the sealing assembly 17, when the sealing assembly 17 is crimped and fixed to the housing can 16.

The sealing assembly 17 has a structure formed by stacking the terminal plate 23, a lower vent member 24, an insulating member 25, an upper vent member 26, and the terminal cap 27 in order from the side of the electrode assembly 14. Each member constituting the sealing assembly 17 has, for example, a disc shape or a ring shape, and each member except the insulating member 25 is electrically connected to each other. The terminal plate 23 has at least one through-hole 23a. The lower vent member 24 and the upper vent member 26 are connected at their center portions, with the insulating member 25 being interposed between their respective circumferential edge portions.

When the battery 10 generates abnormal heat and the internal pressure of the battery 10 increases, the lower vent member 24 deforms so as to push the upper vent member 26 toward the terminal cap 27 and breaks, resulting in interruption of a current path between the lower vent member 24 and the upper vent member 26. As the internal pressure further increases, the upper vent member 26 breaks, so that gas is discharged through a through-hole 27a of the terminal cap 27. As the gas is discharged, excessive increase in internal pressure of the battery 10 and resultant busting of the battery 10 can be prevented, so that the safety of the battery 10 can be enhanced.

The description has been given of the case where the sealing assembly 17 has a stacked structure including two rapture plates (lower vent member 24 and upper vent member 26), and has the protruding terminal cap 27 that covers the rapture plates. However, the sealing assembly 17 may be constituted of only the rupture plates or may have a structure in which a terminal plate, an insulating plate, and a rapture plate are stacked in order from the electrode assembly side. Alternatively, the sealing assembly may not have any rapture plate, and the bottom of the housing may have a thin-walled easily breakable portion that breaks when the battery generates abnormal heat. In this case, the sealing assembly may comprise a current collector plate and a terminal cap having an outer circumferential portion that is joined to an outer circumferential portion of the current collector plate.

FIG. 4 is a schematic top view showing the winding inner side of the electrode assembly 14 as viewed from an axial upper side. Here in FIG. 4, illustration of the separator 13 is omitted. As shown in FIG. 4, the negative electrode 12 includes a both-side mixture arrangement portion 60 where the negative electrode mixture layer 52 is arranged on both a winding inner surface and a winding outer surface of the negative electrode current collector 51. The negative electrode 12 also has a positive electrode facing portion 65 where both a winding inner side and a winding outer side of the both-side mixture arrangement portion 60 face the positive electrode 11 in the radial direction (in the radial direction of the housing can 16).

When the total length of the positive electrode facing portion 65 in the negative electrode longitudinal direction is defined as x, an average length aw1 of the negative electrode mixture layer 52 in the negative electrode width direction from a winding start end of the positive electrode facing portion 65 to x/4 is greater than or equal to 1.0025 times and less than 1.0100 times an average length aw2 of the negative electrode mixture layer 52 in the negative electrode width direction from a winding terminal end of the positive electrode facing portion 65 to x/4.

A description is now given of an example of the method for fabricating the electrode assembly 14, in which the value aw1 is greater than or equal to 1.0025 times and less than 1.0100 times the value aw2. The positive electrode 11 is fabricated by coating the strip-shaped positive electrode current collector 41 with positive electrode mixture slurry containing a positive electrode active material, a conductive agent, and a binding agent, or the like, evenly (uniformly) in the same range in the positive electrode width direction, drying the coating, and then compressing it to arrange the positive electrode mixture layer 42 on both the surfaces of the positive electrode current collector 41. The negative electrode 12 is fabricated by coating the negative electrode current collector 51 with negative electrode mixture slurry containing a negative electrode active material, and a binding agent, or the like, evenly (uniformly) in the same range in the negative electrode width direction, drying the coating, and then compressing it to arrange the negative electrode mixture layer 52 on both the surfaces of the negative electrode current collector 51.

As the negative electrode current collector 51, there is used a negative electrode current collector that is softer and more easily elongated than a general negative electrode collector. Specifically, as the negative electrode current collector 51, there is used a negative electrode current collector having a 1% proof stress of greater than or equal to 100 MPa and less than or equal to 400 MPa, which is smaller than 1% proof stress of general negative electrode current collectors. As the negative electrode current collector 51, there is used a negative electrode current collector in which an elongation rate during tensile testing is greater than or equal to 3% and less than or equal to 20% and which is more easily elongated than general negative electrode collectors. When the negative electrode current collector 51 is constituted of a copper foil, the negative electrode current collector 51 is easily elongated with the average crystal grain size of copper in the copper foil being larger. By constituting the negative electrode current collector 51 with a copper foil having an average crystal grain size of greater than or equal to 2 µm and less than or equal to 20 µm, the negative electrode current collector 51 having the above-mentioned properties can easily be fabricated. The average crystal grain size of copper in the copper foil in the case of constituting the negative electrode current collector 51 with a copper foil can be adjusted with high accuracy by adjusting heat treatment temperature of the negative electrode current collector or by controlling impurities mixed into the constituent materials of the negative electrode current collector, which are publicly known knowledge and therefore detailed description thereof is omitted here.

The negative electrode current collector 51 may not be constituted of a copper foil with an average crystal grain size of greater than or equal to 2 µm and less than or equal to 20 µm. Any publicly known material may be used as the material of the negative electrode current collector. By adjusting the thickness of the negative electrode current collector 51, the negative electrode current collector 51 having the above-mentioned properties can easily be fabricated. The negative electrode mixture layer 52 is configured to contain a silicon-containing material that causes larger expansion of the negative electrode during charging.

In addition, the silicon-containing material is made to include an ionically conductive phase and an Si phase dispersed in the ionically conductive phase so that the weight ratio of the Si phase in the silicon-containing material is greater than or equal to 30% and less than or equal to 60%. The weight ratio of silicon element in the negative electrode mixture layer is set to be greater than or equal to 12 mass% and less than 50 mass%. The negative electrode 12 is configured so that a peel strength of the negative electrode mixture layer 52 is greater than or equal to 9 N/m and less than or equal to 80 N/m. The peeling strength of the negative electrode mixture layer 52 can be adjusted with high accuracy by controlling the amount of a binding agent mixed into the negative electrode mixture layer 52.

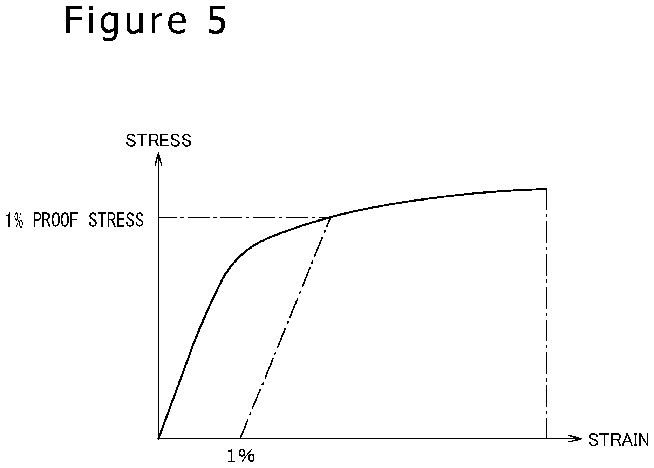

The 1% proof stress of the negative electrode current collector corresponds to proof stress (1%) measured by JIS Z 2241 Metallic Materials-Tensile Testing. FIG. 5 is a view showing the relationship between strain and stress when tensile testing is performed on a negative electrode current collector in an example. The 1% proof stress is a value of stress at a strain of 1%. More specifically, an intersection between a line drawn in parallel to an elastic modulus from a point of 1% on a strain axis and a stress-strain curve is obtained, and the value of stress at the intersection is obtained as the 1% proof stress. The elastic modulus is defined as the slope of stress with respect to strain in a region where strain and stress are in a proportional relationship. The 1% proof stress of the negative electrode current collector can be adjusted with high accuracy by, for example, adjusting the crystal grain size of the material of the negative electrode current collector. In addition, the elongation rate of the negative electrode current collector at the time of tensile testing is the value of strain when the negative electrode current collector breaks in FIG. 5

The peel strength of the negative electrode mixture layer is calculated in accordance with T-peel test in JISK6854 (Testing Methods for Peel Strength of Adhesives). Specifically, a negative electrode is cut out into a piece of 1 cm × 15 cm, and an adhesive tape is prepared in a size of 1 cm wide and 15 cm long. The electrode piece and the adhesive tape are firmly stuck to each other over a length of 10 cm with their distal edges aligned. A piece of paper is stuck over a remnant region of the adhesive tape for protection to prevent an adhesive region from being exposed. A region of the electrode piece not applied with the adhesive tape and the piece of paper are each fixed to a sample holder of a tensile tester and pulled at a speed of 2.5 cm per second, and their average tension is defined as peel strength. The measurement is performed while the region of the electrode piece applied with the adhesive tape is constantly kept at 90 degrees with respect to a pulling direction.

The fabricated positive electrode 11 and the fabricated negative electrode 12 are wound through two separators 13 to fabricate a provisional electrode assembly. Then, a cylindrical secondary battery is fabricated using the fabricated provisional electrode assembly by the method described in FIGS. 1 to 4. The fabricated cylindrical secondary battery is subjected to charging and discharging before shipment. By the charging and discharging, the winding inner side of the negative electrode in the provisional electrode assembly is elongated in the negative electrode width direction to fabricate the electrode assembly 14 with the value aw1 being greater than or equal to 1.0025 times and less than 1.0100 times the value aw2, or the winding inner side of the negative electrode is elongated in the negative electrode width direction based on the use of the battery after shipment to fabricate the electrode assembly 14 with the value aw1 being greater than or equal to 1.0025 times and less than 1.0100 times the value aw2.

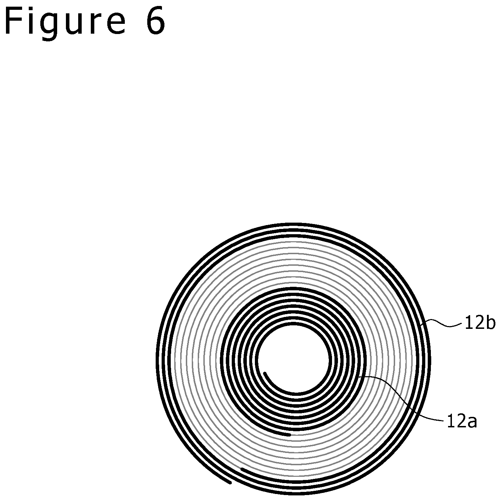

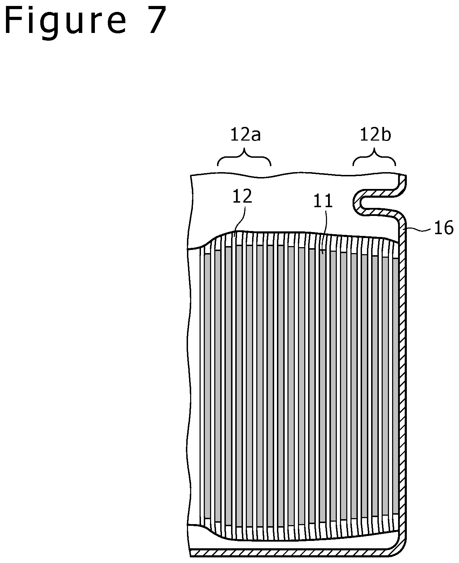

FIG. 6 is a top view showing the position of a winding inner-side portion 12a of the negative electrode and the position of a winding outer-side portion 12b of the negative electrode when the electrode assembly 14 is viewed from the upper side in the axial direction. FIG. 7 is an axial schematic half-sectional view around the electrode assembly in the battery after repeated charging and discharging, the schematic half-sectional view showing an elongated state of the winding inner-side portion 12a of the negative electrode. In FIG. 7, a long and narrow gray area indicates the positive electrode 11, and a long and narrow white area indicates the negative electrode 12. In FIG. 7, illustration of the separators 13 is omitted. As shown in FIG. 7, the winding inner side of the negative electrode elongates in the negative electrode width direction by performing greater than or equal to one charging and discharging session using the aforementioned negative electrode current collector and negative electrode mixture layer as the negative electrode current collector 51 and the negative electrode mixture layer 52.

It is inferred that the mechanism that the elongation of the winding inner side of the negative electrode occurs in the negative electrode width direction with charging and discharging is as described below. Expansion and contraction occur in the negative electrode 12 during discharging. The negative electrode 12 expands radially and axially during charging. In such a background, the winding inner side of the electrode assembly 14 becomes closer to the hollow portion of the electrode assembly 14, so that the radial stress during expansion of the negative electrode tends to be small, and expansion of the negative electrode tends to be large. As a result, it is inferred that the negative electrode 12 tends to elongate in the negative electrode width direction on the winding inner side.

A description is now given of the function and effect of the battery 10 of the present disclosure. A radial stress on the electrode assembly increases with expansion of the negative electrode during charging. Therefore, in the conventional cylindrical secondary battery, when the electrode receives inward force due to the radial stress in the vicinity of the hollow portion of the electrode assembly on the winding inner side, the electrode may bend toward the hollow portion, and this may cause damage to the separator.

In contrast, in the battery 10 in the present disclosure, the winding inner side of the negative electrode in the electrode assembly 14 elongates due to charging and discharging. Therefore, since the mass of the negative electrode mixture layer per unit surface area of the negative electrode current collector on the winding inner side of the negative electrode becomes smaller, the radial expansion of the negative electrode on the winding inner side of the negative electrode becomes smaller. This reduces the radial stress during expansion of the negative electrode on the winding inner side of the electrode assembly, so that the bending of the electrode toward the hollow portion is effectively restrained or prevented. As a result, a damage to the separator 13 can effectively be restrained and the reliable battery 10 can be fabricated.

### <Example 1>

A battery with a value of [(aw1/aw2) - 1] × 100 being 0.28%, a value of aw1 - aw2 being 0.16 mm, a discharge capacity per 1 g of negative electrode mixture being 0.52 Ah/g, a 1% proof stress of the negative electrode current collector being 350 MPa, and an elongation rate of the negative electrode current collector being 5% was used as the battery of Example 1. Here, the value of [(aw1/aw2) - 1] × 100 and the value of aw1 - aw2 in each battery in Example 1 and in following Examples 2 to 4 and Comparative Examples 1 to 5 were values specified after execution of ten charging and discharging cycles, in which each battery was charged to 4.2 V with a constant current of 0.3 C under the environment air-cooled to 45°C, then charged at a constant voltage of 4.2 V until the current value reached 0.02 C, and then discharged with a constant current of 0.5 C until the battery voltage reached 2.85 V.

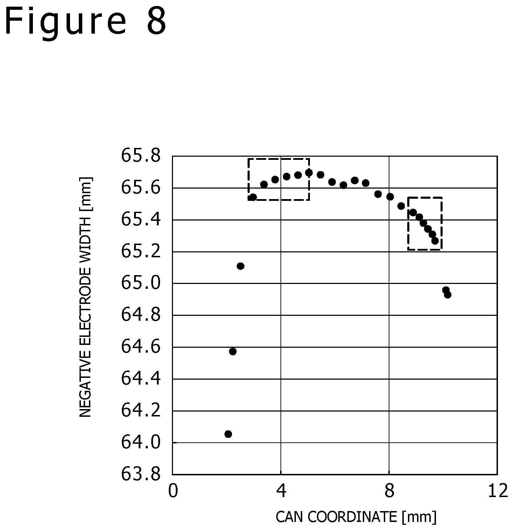

FIG. 8 is a diagram showing an example of the relationship between the radial position of the housing can and the width of the negative electrode. As shown in FIG. 8, in each of Examples 1 to 4 and Comparative Examples 1 to 5, the values aw1 and aw2 were each approximately calculated by calculating an average length of the negative electrode mixture layer in the negative electrode width direction at a plurality of representative points (six representative points in the present example), which include both ends of their respective negative electrode longitudinal ranges of the positive electrode facing portion and which are arranged at equal intervals in the negative electrode longitudinal direction. The arrangement position of the negative electrode mixture layer in the negative electrode width direction is known. Therefore, when the position of the negative electrode is known, the position of the negative electrode mixture layer is known.

The elongation of the negative electrode can be specified by, for example, computed tomography (CT) images of an axial cross section of the electrode assembly, or by measurement through detachment of the negative electrode in destructive testing. In Examples 1 to 4 and Comparative Examples 1 to 5, the 1% proof stress of the negative electrode current collector and the elongation rate of the negative electrode current collector were calculated using the above methods.

### <Example 2>

A battery with a value of [(aw1/aw2) - 1] × 100 being 0.35%, a value of aw1 - aw2 being 0.20 mm, a discharge capacity per 1 g of negative electrode mixture being 0.52 Ah/g, a 1% proof stress of the negative electrode current collector being 200 MPa, and an elongation rate of the negative electrode current collector being 10% was used as the battery of Example 2.

### <Example 3>

A battery with a value of [(aw1/aw2) - 1] × 100 being 0.35%, a value of aw1 - aw2 being 0.20 mm, a discharge capacity per 1 g of negative electrode mixture being 0.90 Ah/g, a 1% proof stress of the negative electrode current collector being 350 MPa, and an elongation rate of the negative electrode current collector being 5% was used as the battery of Example 3.

### <Example 4>

A battery with a value of [(aw1/aw2) - 1] × 100 being 0.50%, a value of aw1 - aw2 being 0.29 mm, a discharge capacity per 1 g of negative electrode mixture being 0.90 Ah/g, a 1% proof stress of the negative electrode current collector being 200 MPa, and an elongation rate of the negative electrode current collector being 10% was used as the battery of Example 4.

### <Comparative Example 1>

A battery with a value of [(aw1/aw2) - 1] × 100 being 0.18%, a value of aw1 - aw2 being 0.10 mm, a discharge capacity per 1 g of negative electrode mixture being 0.52 Ah/g, a 1% proof stress of the negative electrode current collector being 600 MPa, and an elongation rate of the negative electrode current collector being 2% was used as the battery of Comparative Example 1.

### <Comparative Example 2>

A battery with a value of [(aw1/aw2) - 1] × 100 being 0.22%, a value of aw1 - aw2 being 0.13 mm, a discharge capacity per 1 g of negative electrode mixture being 0.90 Ah/g, a 1% proof stress of the negative electrode current collector being 600 MPa, and an elongation rate of the negative electrode current collector being 2% was used as the battery of Comparative Example 2.

### <Comparative Example 3>

A battery with a value of [(aw1/aw2) - 1] × 100 being 0.21%, a value of aw1 - aw2 being 0.12 mm, a discharge capacity per 1 g of negative electrode mixture being 0.52 Ah/g, a 1% proof stress of the negative electrode current collector being 350 MPa, and an elongation rate of the negative electrode current collector being 5% was used as the battery of Comparative Example 3.

### <Comparative Example 4>

A battery with a value of [(aw1/aw2) - 1] × 100 being 1.10%, a value of aw1 - aw2 being 0.64 mm, a discharge capacity per 1 g of negative electrode mixture being 0.90 Ah/g, a 1% proof stress of the negative electrode current collector being 350 MPa, and an elongation rate of the negative electrode current collector being 5% was used as the battery of Comparative Example 4.

### <Comparative Example 5>

A battery with a value of [(aw1/aw2) - 1] × 100 being 0.18%, a value of aw1 - aw2 being 0.10 mm, a discharge capacity per 1 g of negative electrode mixture being 0.35 Ah/g, a 1% proof stress of the negative electrode current collector being 200 MPa, and an elongation rate of the negative electrode current collector being 10% was used as the battery of Comparative Example 5.

### (Test for Measuring Deformation Amount of Electrode Plate)

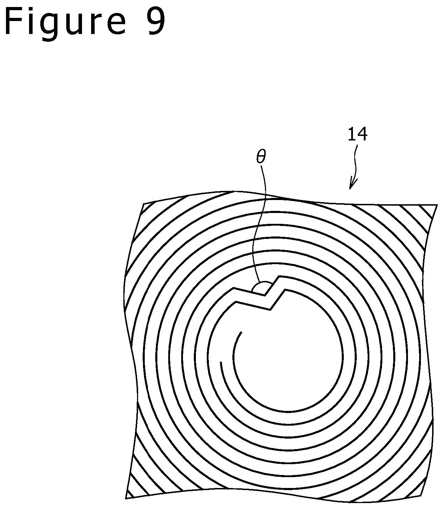

Each battery in Examples 1 to 4 and Comparative Examples 1 to 5 was charged to 4.2 V with a constant current of 0.3 C under the environment air-cooled to 45°C, and then charged at a constant voltage of 4.2 V until the current value reached 0.02 C. Then, each battery was discharged with a constant current of 0.5 C until the battery voltage reached 2.85 V. This charge and discharge cycle was repeated 300 times. After that, a bending angle of the electrode shown as θ in FIG. 9, which was the angle most bent toward the hollow portion of the electrode assembly on the winding inner side of the electrode body, was measured with CT images of a cross section of the electrode assembly that was parallel to the radial direction. When the bending angle θ was equal to or more than 170 °, A was determined, when the bending angle θ was greater than or equal to 150 ° and less than 170 °, B was determined, and the bending angle θ was less than or equal to 150 °, C was determined.

### (Foil Breakage Test)

Each battery in Examples 1 to 4 and Comparative Examples 1 to 5 was charged to 4.2 V with a constant current of 0.3 C under the environment air-cooled to 45°C, and then charged at a constant voltage of 4.2 V until the current value reached 0.02 C. Then, each battery was discharged with a constant current of 0.5 C until the battery voltage reached 2.85 V. This charge and discharge cycle was repeated 300 times. Then, based on CT images of the electrode assembly in the axial cross-section, the presence or absence of the foil breakage was confirmed.

### (Measurement of Capacity)

The capacity of each battery in Examples 1 to 5, and each battery in Comparative Examples 1, 2 was measured. Specifically, after each battery was fabricated, each battery was charged with a constant current of 0.2 C under the environmental temperature of 25°C until each battery voltage reached 2.5 V, and then each battery was charged at a constant voltage of 4.2 V until the current value reached 0.02 C. After that, each battery was discharged with a constant current of 0.2 C until the battery voltage reached 2.5 V, and the capacity (discharge capacity) was measured. The capacity of each battery is shown as a relative value when the capacity of the battery in Example 1 is 100.

**[Table 1]**

| | [(aw1/aw2) - 1] × 100 % | (aw1 - aw2) mm | Discharge capacity per 1 g of negative electrode mixture Ah/g | Current collector 1% proof stress MPa | Current collector elongation rate % |
|---|---|---|---|---|---|
| Example 1 | 0.28 | 0.16 | 0.52 | 350 | 5 |
| Example 2 | 0.35 | 0.20 | 0.52 | 200 | 10 |
| Example 3 | 0.35 | 0.20 | 0.90 | 350 | 5 |
| Example 4 | 0.50 | 0.29 | 0.90 | 200 | 10 |
| Comparative example 1 | 0.18 | 0.10 | 0.52 | 600 | 2 |
| Comparative example 2 | 0.22 | 0.13 | 0.90 | 600 | 2 |
| Comparative example 3 | 0.21 | 0.12 | 0.52 | 350 | 5 |
| Comparative example 4 | 1.10 | 0.64 | 0.90 | 350 | 5 |
| Comparative example 5 | 0.18 | 0.10 | 0.35 | 200 | 10 |

**[Table 2]**

| | Electrode plate deformation | Foil breakage | Capacity |
|---|---|---|---|
| Example 1 | A | Absent | 100 |
| Example 2 | A | Absent | 100 |
| Example 3 | A | Absent | 108 |
| Example 4 | A | Absent | 108 |
| Comparative example 1 | B | Absent | 100 |
| Comparative example 2 | C | Absent | 108 |
| Comparative example 3 | B | Absent | 100 |
| Comparative example 4 | A | Present | 108 |
| Comparative example 5 | A | Absent | 90 |

The values related to the above physical properties of each battery are shown in Table 1, and the test results are shown in Table 2. As shown in Tables 1 and 2, it was successfully confirmed that each battery in Comparative Examples 1 to 3, in which the value aw1 was less than 1.0025 that is the value of aw2, had the electrode plate deformation determined to B or C, so that bending of the electrode easily occurred on the winding inner side of the electrode assembly.

It was also successfully confirmed that the battery of Comparative Example 5, in which the discharge capacity per 1 g of negative electrode mixture was less than 0.50 Ah, had the electrode plate deformation determined to A, so that bending of the electrode did not occur on the winding inner side of the electrode assembly, though the capacity was as extremely small as 90, making it impossible to fabricate high-performance batteries.

It was also confirmed that the battery in Comparative Example 4, in which the value aw1 was greater than or equal to 1.0100 times the value aw2, had foil breakage due to excessive elongation of the electrode on the winding inner side of the electrode assembly.

In contrast, each battery in Examples 1 to 4, in which the value aw1 was greater than or equal to 1.0025 times and less than 1.0100 times the value aw2 and the discharge capacity per 1 g of the negative electrode mixture was greater than or equal to 0.50 Ah, had no bending of the electrode on the winding inner side of the electrode assembly and no foil breakage, so that high-capacity batteries were successfully fabricated.

### [Configuration Preferably Adopted in Battery of Present Disclosure]

Since the stress on the winding inner side of the electrode assembly can be effectively reduced during expansion of the negative electrode, 0.15 mm < (aw1 - aw2) is preferably adopted. In the case of (aw1 - aw2) ≥ 0.50 mm, the axial length of the electrode assembly before charging and discharging needs to be reduced in consideration of the elongation of the negative electrode on the winding inner side of the electrode assembly, making it difficult to increase the battery capacity. In other words, (aw1 - aw2) < 0.50 mm is preferably adopted because the battery capacity is easily increased.

Since the stress on the winding inner side of the electrode assembly during expansion of the negative electrode can be effectively reduced, an average thickness at1 of the negative electrode mixture layer from the winding start end of the positive electrode facing portion 65 to x/4 is preferably less than 0.9975 times an average thickness at2 of the negative electrode mixture layer from the winding terminal end of the positive electrode facing portion 65 to x/4. Since the battery capacity is easily increased without excessive elongation of the negative electrode on the winding inner side of the electrode assembly, the value at1 is preferably greater than or equal to 0.9900 times the value at2.

The negative electrode mixture layer 52 preferably contains a silicon-containing material to make it easier to increase the capacity. In addition, when the negative electrode mixture layer 52 contains a silicon-containing material, expansion of the negative electrode mixture layer 52 is pronounced during charging and therefore, when the configuration of the present disclosure is not adopted, the electrode on the winding inner side of the electrode assembly is more easily deformed during expansion of the negative electrode. In other words, the function and effect of the present disclosure, that is, the effect of restraining the deformation of the electrode by reducing the stress on the winding inner side of the electrode assembly during expansion of the negative electrode, becomes exceptional and remarkable.

For easily achieving higher discharge capacity and high output of the battery 10, a weight ratio of the Si phase 72 in the silicon-containing material 70 is preferably greater than or equal to 30%. Since the volume change in the negative electrode mixture layer 52 during charging and discharging can be reduced, and the bending of the electrodes 11 and 12 on the winding inner side of the electrode assembly can be effectively restrained, the weight ratio of the Si phase 72 in the silicon-containing material 70 is preferably less than or equal to 60%.

The weight ratio of the silicon element to the negative electrode mixture layer 52 is preferably greater than or equal to 7 mass%, and more preferably greater than or equal to 12 mass% for high discharge capacity and high output of the battery 10. In addition, since the volume change in the negative electrode mixture layer 52 during charging and discharging can be reduced, and the bending of the electrodes 11 and 12 on the winding inner side of the electrode assembly can be effectively restrained, the weight ratio of the silicon element to the negative electrode mixture layer 52 is preferably less than 50 mass%.

Since the stress on the winding inner side of the electrode assembly can be effectively reduced during expansion of the negative electrode, the 1% proof stress of the negative electrode current collector is preferably less than or equal to 400 MPa. Since the battery capacity is easily increased without excessive elongation of the negative electrode on the winding inner side of the electrode assembly, the 1% proof stress of the negative electrode current collector is preferably greater than or equal to 100 MPa.

Since the stress on the winding inner side of the electrode assembly can be effectively reduced during expansion of the negative electrode, the elongation rate of the negative electrode current collector 51 during tensile testing is preferably greater than or equal to 3%. Since the battery capacity is easily increased without excessive elongation of the negative electrode on the winding inner side of the electrode assembly, the elongation rate of the negative electrode current collector 51 during tensile testing is preferably less than or equal to 20%.

Since the stress on the winding inner side of the electrode assembly can be effectively reduced during expansion of the negative electrode, the negative electrode current collector 51 is preferably constituted of copper with an average crystal grain size of greater than or equal to 2 µm. Since the battery capacity is easily increased without excessive elongation of the negative electrode on the winding inner side of the electrode assembly, the negative electrode current collector 51 is preferably constituted of copper with an average crystal grain size of less than or equal to 20 µm

Since the negative electrode mixture layer 52 is less likely to be peeled from the negative electrode current collector 51, and so the length of the negative electrode mixture layer 52 on the winding inner side of the negative electrode in the negative electrode width direction can be reliably elongated to the length that can effectively reduce the stress on the winding inner side of the electrode assembly, the peel strength of the negative electrode 12 is preferably greater than or equal to 9 N/m. In addition, since the capacity is easily increased and electrical resistance is also easily reduced without causing excessive hardening of the negative electrode mixture layer 52, the peel strength of the negative electrode is preferably less than or equal to 80 N/m.

### [Modifications]

The present disclosure is not limited to the embodiment and its modifications disclosed, and various improvements and changes are possible without departing from the scope of the Claims of the present invention and any equivalents thereof.

For example, in the above embodiment, a description has been given of the case where the deformation of the electrode on the winding inner side of the electrode assembly is restrained by constituting the negative electrode current collector 51 with a material that is easy to elongate so as to intentionally elongate the negative electrode 12 in the negative electrode width direction on the winding inner side of the electrode assembly. However, according to the present disclosure, the negative electrode current collector may be constituted of any publicly known material. Even in the case where the negative electrode current collector is constituted of a hard material and thereby the negative electrode does not elongate or hardly elongate in the negative electrode width direction on the winding inner side of the electrode assembly, the battery of the present disclosure can be fabricated in such a way that the negative electrode mixture slurry to be applied on the winding inner side of the negative electrode current collector is applied to be thinner than that on the winding outer side and to be wider in the negative electrode width direction during fabrication of the negative electrode.

The cylindrical secondary battery of the present disclosure may have following configurations.

Configuration 1: a cylindrical secondary battery, comprising: an electrode assembly having a strip-shaped positive electrode and a strip-shaped negative electrode wound through a separator; a non-aqueous electrolyte; and a bottomed cylindrical housing can that houses the electrode assembly and the non-aqueous electrolyte, wherein the positive electrode includes a positive electrode current collector and a positive electrode mixture layer arranged on the positive electrode current collector, the negative electrode includes a negative electrode current collector and a negative electrode mixture layer arranged on the negative electrode current collector, a discharge capacity per 1.0 g of the negative electrode mixture layer is greater than or equal to 0.50 Ah, the negative electrode includes a both-side mixture arrangement portion where the negative electrode mixture layer is arranged on both a winding inner surface and a winding outer surface of the negative electrode current collector, the negative electrode has a positive electrode facing portion where both a winding inner side and a winding outer side of the both-side mixture arrangement portion face the positive electrode in a radial direction, and when a total length of the positive electrode facing portion in a negative electrode longitudinal direction is defined as x, an average length aw1 of the negative electrode mixture layer in a negative electrode width direction from a winding start end of the positive electrode facing portion to x/4 is greater than or equal to 1.0025 times and less than 1.0100 times an average length aw2 of the negative electrode mixture layer in the negative electrode width direction from a winding terminal end of the positive electrode facing portion to x/4.

Configuration 2: the cylindrical secondary battery according to Configuration 1, wherein 0.15 mm <(aw1 - aw2) < 0.50 mm.

Configuration 3: the cylindrical secondary battery according to Configuration 1 or 2, wherein an average thickness at1 of the negative electrode mixture layer from a winding start end of the positive electrode facing portion to x/4 is greater than or equal to 0.9900 times and less than 0.9975 times an average thickness at2 of the negative electrode mixture layer from a winding terminal end of the positive electrode facing portion to x/4.

Configuration 4: the cylindrical secondary battery according to any one of Configurations 1 to 3, wherein the negative electrode mixture layer contains a silicon-containing material.

Configuration 5: the cylindrical secondary battery according to Configuration 4, wherein the silicon-containing material includes an ionically conductive phase and an Si phase dispersed in the ionically conductive phase.

Configuration 6: the cylindrical secondary battery according to Configuration 5, wherein the ionically conductive phase includes an amorphous carbon phase.

Configuration 7: the cylindrical secondary battery according to Configuration 5 or 6, wherein a weight ratio of the Si phase in the silicon-containing material is greater than or equal to 30% and less than or equal to 60%.

Configuration 8: the cylindrical secondary battery according to any one of Configurations 4 to 7, wherein a weight ratio of silicon element in the negative electrode mixture layer is greater than or equal to 7 mass%.

Configuration 9: the cylindrical secondary battery according to any one of Configurations 4 to 8, wherein a weight ratio of silicon element in the negative electrode mixture layer is less than or equal to 50 mass%.

Configuration 10: the cylindrical secondary battery according to any one of Configurations 1 to 9, wherein a 1% proof stress of the negative electrode current collector is greater than or equal to 100 MPa and less than or equal to 400 MPa.

Configuration 11: the cylindrical secondary battery according to any one of Configurations 1 to 10, wherein an elongation rate of the negative electrode current collector during tensile testing is greater than or equal to 3% and less than or equal to 20%.

Configuration 12: the cylindrical secondary battery according to any one of Configurations 1 to 11, wherein the negative electrode current collector is constituted of copper with an average crystal grain size of greater than or equal to 2 µm and less than or equal to 20 µm.

Configuration 13: the cylindrical secondary battery according to any one of Configurations 1 to 12, wherein a peel strength of the negative electrode mixture layer is greater than or equal to 9 N/m and less than or equal to 80 N/m.

### REFERENCE SIGNS LIST

10 Battery, 11 Positive electrode, 12 Negative electrode, 12a Winding inner-side portion, 12b Winding outer-side portion, 13 Separator, 14 Electrode assembly, 16 Housing can, 17 Sealing assembly, 18, 19 Insulating plate, 20 Positive electrode lead, 21 Negative electrode lead, 23 Terminal plate, 24 Lower vent member, 25 Insulating member, 26 Upper vent member, 27 Terminal cap, 28 Gasket, 30 Cylindrical portion, 34 Grooved portion, 38 Shoulder portion, 41 Positive electrode current collector, 42 Positive electrode mixture layer, 48 Circumferential edge portion, 51 Negative electrode current collector, 52 Negative electrode mixture layer, 55 Bottom portion, 60 Both-side mixture arrangement portion, 65 Positive electrode facing portion, 70 Silicon-containing material, 71 Ionically conductive phase, 72 Si phase.

## Claims

1. A cylindrical secondary battery, comprising:
an electrode assembly having a strip-shaped positive electrode and a strip-shaped negative electrode wound through a separator;
a non-aqueous electrolyte; and
a bottomed cylindrical housing can that houses the electrode assembly and the non-aqueous electrolyte, wherein
the positive electrode includes a positive electrode current collector and a positive electrode mixture layer arranged on the positive electrode current collector,
the negative electrode includes a negative electrode current collector and a negative electrode mixture layer arranged on the negative electrode current collector,
a discharge capacity per 1.0 g of the negative electrode mixture layer is greater than or equal to 0.50 Ah,
the negative electrode includes a both-side mixture arrangement portion where the negative electrode mixture layer is arranged on both a winding inner surface and a winding outer surface of the negative electrode current collector,
the negative electrode has a positive electrode facing portion where both a winding inner side and a winding outer side of the both-side mixture arrangement portion face the positive electrode in a radial direction, and
when a total length of the positive electrode facing portion in a negative electrode longitudinal direction is defined as x, an average length aw1 of the negative electrode mixture layer in a negative electrode width direction from a winding start end of the positive electrode facing portion to x/4 is greater than or equal to 1.0025 times and less than 1.0100 times an average length aw2 of the negative electrode mixture layer in the negative electrode width direction from a winding terminal end of the positive electrode facing portion to x/4.

2. The cylindrical secondary battery according to Claim 1, wherein 0.15 mm <(aw1 - aw2) < 0.5 mm.

3. The cylindrical secondary battery according to Claim 1, wherein
an average thickness at1 of the negative electrode mixture layer from a winding start end of the positive electrode facing portion to x/4 is greater than or equal to 0.9900 times and less than 0.9975 times an average thickness at2 of the negative electrode mixture layer from a winding terminal end of the positive electrode facing portion to x/4.

4. The cylindrical secondary battery according to Claim 1, wherein the negative electrode mixture layer contains a silicon-containing material.

5. The cylindrical secondary battery according to Claim 4, wherein the silicon-containing material includes an ionically conductive phase and an Si phase dispersed in the ionically conductive phase.

6. The cylindrical secondary battery according to Claim 5, wherein the ionically conductive phase includes an amorphous carbon phase.

7. The cylindrical secondary battery according to Claim 5, wherein a weight ratio of the Si phase in the silicon-containing material is greater than or equal to 30% and less than or equal to 60%.

8. The cylindrical secondary battery according to Claim 4, wherein a weight ratio of silicon element in the negative electrode mixture layer is greater than or equal to 7 mass%.

9. The cylindrical secondary battery according to Claim 4, wherein a weight ratio of silicon element in the negative electrode mixture layer is less than or equal to 50 mass%.

10. The cylindrical secondary battery according to Claim 1, wherein a 1% proof stress of the negative electrode current collector is greater than or equal to 100 MPa and less than or equal to 400 MPa.

11. The cylindrical secondary battery according to Claim 1, wherein an elongation rate of the negative electrode current collector during tensile testing is greater than or equal to 3% and less than or equal to 20%.

12. The cylindrical secondary battery according to Claim 1, wherein the negative electrode current collector is constituted of copper with an average crystal grain size of greater than or equal to 2 µm and less than or equal to 20 µm.

13. The cylindrical secondary battery according to Claim 1, wherein a peel strength of the negative electrode mixture layer is greater than or equal to 9 N/m and less than or equal to 80 N/m.
